# EUROPEAN PATENT APPLICATION

(11) **EP 2 230 062 A1**
(43) Date of publication of application: **22.09.2010**
(21) Application number: 09166966.3
(22) Date of filing: 31.07.2009
(51) Int. Cl.: B29C 45/42, B29C 33/44

(54) **Apparatus for removing resin-molded product**

(30) Priority: 18.03.2009 JP 2009065941
(71) Applicant: Star Seiki Co., Ltd., Mizuho-ku Nagoya-shi Aichi (JP)
(72) Inventor: Ishibashi, Shouji, Niwa-gun Aichi (JP); Mizuno, Kouji, Niwa-gun Aichi (JP)
(74) Representative: Hofstetter, Alfons J.

(57) **Abstract**

To move up and down a holder member with a long stroke with a simple structure so as to reduce a mounting space. To remove a resin-molded product while keeping the posture of the holder member constant with a simple structure.

An apparatus for removing resin-molded product provided in a resin molding machine and configured to remove a resin-molded product outside the resin molding machine by moving a holder member, comprising a main body frame fixed to a fixed platen in the resin molding machine so as to extend in parallel to the center axial line of the resin molding machine, a movable body supported on the main body frame so as to move between the fixed platen side and a movable mold side, a moving member for reciprocating the movable body, a vertical frame having an axial line in the vertical direction and supported so as to rotate with respect to the movable body, a rotating member for rotating the vertical frame, a pair of swing arms swingably supported by the vertical frame at their base end portions and arranged in parallel to each other with a predetermined interval, a mounting frame pivotably supported at the leading end portions of the respective swing arms in parallel to the vertical frame and having an axial line in the vertical direction, a swing member connected to at least one of the swing arms and swing the swing arm in the vertical direction and a holder member fixed to the lower portion of the mounting frame and configured to hold the resin-molded product.

## Description

### BACKGROUND OF THE INVENTION

### 1. Field of the Invention

The present invention relates to an apparatus for removing resin-molded product using a resin molding machine.

### 2. Description of the Related Art

For example, as a conventional apparatus for removing resin-molded product, JP2003-300232A discloses a apparatus for removing resin-molded product including: a main body frame which is fixed to the operating side or non-operating side of a fixed-side platen in a resin molding machine so as to extend in parallel to the center axial line of the resin molding machine, between a mold position and an injection unit side of the resin molding machine; a longitudinally running body which is supported so as to move relative to the main body frame in the center axial line direction; a laterally running body which is supported so as to move relative to the longitudinally running body in the direction perpendicular to the center axial line on a lateral frame extending between the operating side or non-operating side and mold position; and a vertical unit which is mounted on the laterally running body so as to move a holder member for holding a resin-molded product between the mold position and a position apart upward from the mold. With this configuration, the holder member is moved in three-dimensional directions by the drive of the longitudinally running body, laterally running body and vertical unit so as to remove the resin-molded product.

In the resin molding machine, a safety door is attached, in a freely opened/closed manner, on the operating side and non-operating side of the mold portion so as to cover the entire mold portion in consideration of safety during molding work. Therefore, in the apparatus for removing resin-molded product disclosed in JP2003-300232A, in order to allow a resin-molded product to be removed from the resin molding machine to pass over the safety door reliably, the holder member needs to be moved with a long vertical stroke, so that it is necessary to use a large-sized long stroke member as the vertical unit. These results in an increase in the size of the apparatus for removing resin-molded product itself, leading to an increase in facility cost.

In the case where the apparatus for removing resin-molded product handles a resin-molded product of large-sized, the size of the apparatus for removing resin-molded product itself is correspondingly large, so that it is possible to ensure a wide space around the machine. However, in the case where the apparatus for removing resin-molded product handles a resin-molded product of small-sized, the size of the apparatus for removing resin-molded product itself is correspondingly small and, because of need to increase productivity, a large number of resin molding machines need to be provided in a predetermined molding space, which makes it difficult to ensure a wide space between respective resin molding machines.

For example, as an apparatus for removing the small-sized resin-molded product, JP2003-245927A discloses a apparatus for removing resin-molded product including a slider which is supported so as to move in the direction of the center axial line of a resin molding machine relative to a main body frame which is fixed to the operating side or non-operating side of a fixed-side platen in the resin molding machine so as to extend in the center axial line; an electric motor which is fixed to the slider and has its axial line parallel to the center axial line of the resin molding machine; a turning arm having a base end portion which is fixed to a rotary shaft of the electric motor and having a tip end portion to which a vertical unit is attached; and a holder member for holding a resin-molded product, which is mounted at the tip end portion of the vertical unit.

In the apparatus for removing resin-molded product disclosed in JP2003-245927A, the vertical unit is driven in the vertical direction in accordance with the rotation of the turning arm so as to allow the holder member to pass over a safety door of the resin molding machine. However, in a apparatus for removing resin-molded product having the above configuration, it is necessary to control the rotation of the vertical unit in accordance with the rotation of the turning arm because of need to keep the vertical unit in an upright position. Therefore, a mechanism for rotating the vertical unit in association with the rotation of the turning arm is required, complicating a configuration of the machine, which may lead to an increase in cost. Further, in this case, the tip end portion of the turning arm is increased in weight, so that it is necessary to use an electric motor with high-speed rotation and high torque in order to achieve high-speed turn of the turning arm with high responsiveness, which may increase the size of the machine and cost.

A problem to be solved is that in order to increase the vertical stroke of the holder member so as not to interfere with the resin molding machine, it is necessary to use a long stroke member of large-sized as the vertical unit, which increases the size and weight of the machine. Another problem to be solved is that in order to keep the posture of the holder member while the turning arm is being turned, it is necessary to add a member for controlling the posture of the holder member to the turning arm, complicating a configuration of the machine, which may result in an increase in cost.

### SUMMARY OF THE INVENTION

According to a first aspect of the present invention, there is provided an apparatus for removing resin-molded product, including: a main body frame fixed to a fixed platen in a resin molding machine so as to extend in parallel to the center axial line of the resin molding machine; a movable body supported on the main body frame so as to move between the fixed platen side and a movable mold side; a moving member for reciprocating the movable body; a vertical frame having an axial line in the vertical direction and supported so as to rotate with respect to the movable body; a rotating member for rotating the vertical frame; a pair of swing arms swingably supported by the vertical frame at their base end portions and arranged in parallel to each other with a predetermined interval; a mounting frame pivotably supported at the leading end portions of the respective swing arms in parallel to the vertical frame and having an axial line in the vertical direction; a swing member connected to at least one of the swing arms and swing the swing arm in the vertical direction; and a holder member fixed to the lower portion of the mounting frame and configured to hold a resin-molded product.

According to a second aspect of the present invention, there is provided an apparatus for removing resin-molded product including: a main body frame fixed to a fixed platen in a resin molding machine so as to extend in parallel to the center axial line of the resin molding machine; a movable body supported on the main body frame so as to move between the fixed platen side and a movable mold side; a moving member for reciprocating the movable body; a vertical frame having an axial line in the vertical direction and supported so as to rotate with respect to the movable body; a link rotating member for rotating the vertical frame in accordance with the movement of the movable body; a pair of swing arms swingably supported by the vertical frame at their base end portions and arranged in parallel to each other with a predetermined interval; a mounting frame pivotably supported at the leading end portions of the respective swing arms in parallel to the vertical frame and having an axial line in the vertical direction; a swing member connected to at least one of the swing arms and swing the swing arm in the vertical direction; and a holder member fixed to the lower portion of the mounting frame and configured to hold a resin-molded product.

According to the present invention, it is possible to move up and down the holder member with a long stroke with a simple structure to thereby reduce a mounting space. Further, it is possible to move up and down the holder member with a long stroke by using the shorter stroke moving member to thereby reduce the size and weight of the machine. Further, it is possible to keep the posture of the holder member constant with a simple structure.

### BRIEF DESCRIPTION OF THE DRAWINGS

FIG. 1 is an entire perspective view of the apparatus for removing resin-molded product;
FIG. 2 is an exploded perspective view of the apparatus for removing resin-molded product;
FIG. 3 is an explanatory view showing a stand-by state of the apparatus for removing resin-molded product;
FIG. 4 is an explanatory view showing a state where a holder grip enters between molds;
FIG. 5 is an explanatory view showing a forward movement of the holder grip;
FIG. 6 is an explanatory view showing a backward movement of the holder grip;
FIG. 7 is an explanatory view showing a state where the holder grip is pulled up from between the molds;
FIG. 8 is an explanatory view showing a rotating state of a vertical frame;
FIG. 9 is an explanatory view showing a state where a sprue is released;
FIG. 10 is an explanatory view showing a modification of a link rotating mechanism; and
FIG. 11 is an explanatory view showing another modification of a link rotating mechanism.

### DETAILED DESCRIPTION OF THE PREFERRED EMBODIMENTS

In the present invention, a pair of swing arms swingably supported in parallel to each other with a predetermined interval by a vertical frame which is provided in a fixed platen of a resin molding machine so as to extend in the vertical direction, to move in parallel to the center axial direction of the resin molding machine, and to rotate, is swung in the vertical direction to thereby cause a holder member, which is fixed to the lower portion of a mounting frame pivotably supported at the leading end portions of the respective swing arms in parallel to the vertical frame, to move up and down in a vertical posture so as to remove a resin-molded product from a mold of the resin molding machine.

### [First Embodiment]

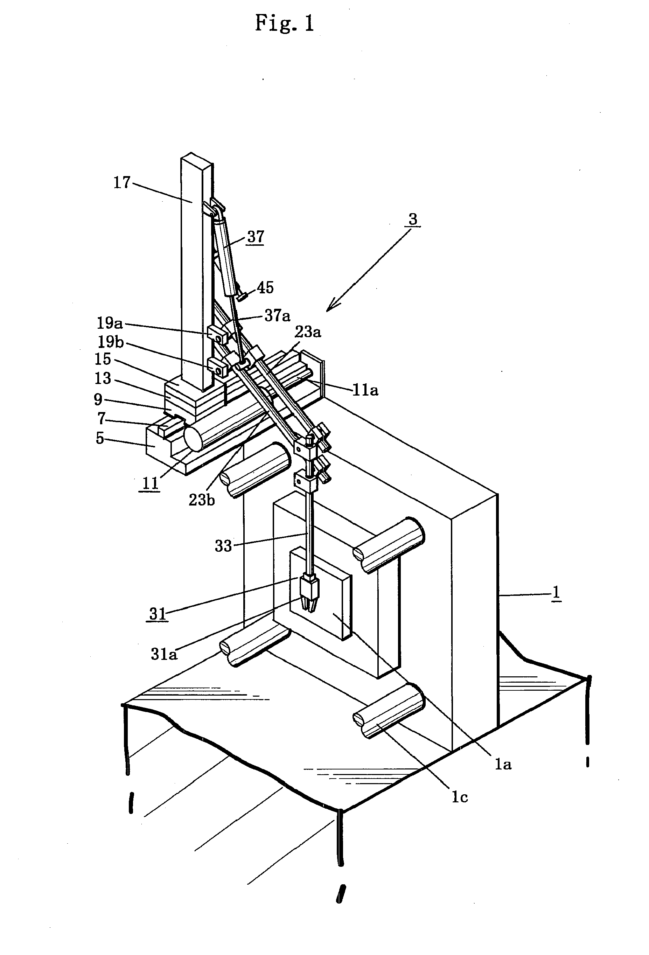

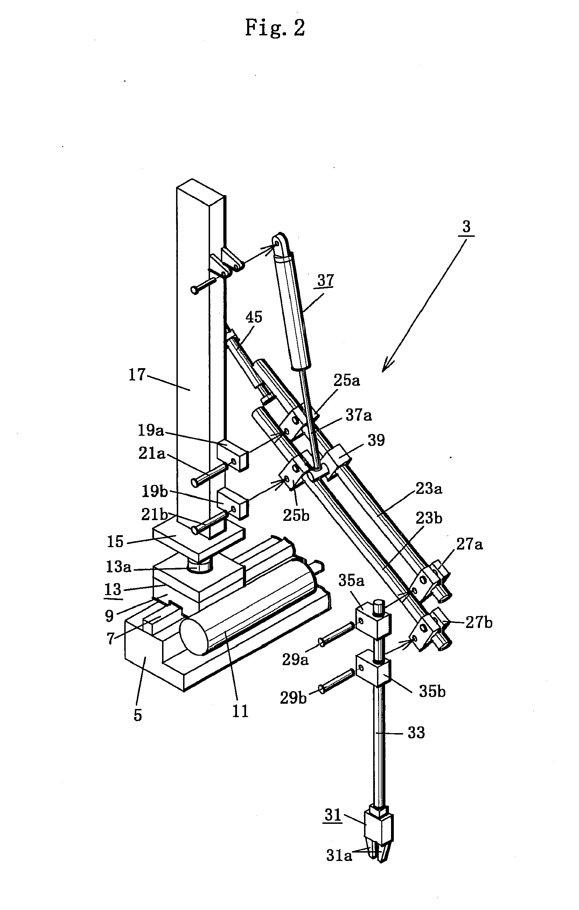

An embodiment of the present invention will be described with reference to the accompanying drawings.
As shown in FIGS. 1 and 2, the apparatus for removing resin-molded product 3 is fixed to upper surface of the end portion of a fixed platen 1 of the operating-side or the non-operating-side in a resin molding machine. A main body frame 5 of the apparatus for removing resin-molded product 3 is fixed to the fixed platen 1 at its rear end portion. In this state, the main body frame 5 extends in the front-rear direction which is parallel to the center axial line of the resin molding machine so as to reach an opened movable mold.

A rail 7 extending in the front-rear direction is fixed to the main body frame 5. A movable body 9 is supported by the rail 7 so as to be movable in the front-rear direction. The main body of a cylinder 11 constituting a moving member whose axial line is parallel to the front-rear direction is fixed to the movable member 9, and a rod 11a of the cylinder 11 is fixed to a part of the main body frame 5. With this configuration, the movable body 9 can reciprocate between the front and rear positions on the main body frame 5 in accordance with the movement of the cylinder 11.

A known reciprocating mechanism may be used as the moving member, such as a feed screw mechanism in which a feed screw connected to an electric motor is engaged with a nut member provided in the movable body 9, a belt mechanism in which a pulley provided on a rotary shaft of an electric motor provided in the movable member 9 is engaged with a belt looped around the main body frame in the longitudinal direction thereof, or the like.

A rotating member 13, such as an air motor or electric motor, whose axial line extends in the vertical direction is fixed to the movable member 9, and a mounting member 15 is fixed to the rotary shaft 13a of the rotating member 13. The mounting member 15 is rotated by at least 180° by the drive of the rotating member 13.

The base end portion of a vertical frame 17 having a predetermined vertical length is fixed to the mounting member 15. A pair of bearing portions 19a and 19b are formed at the lower side of the vertical frame 17 so as to be arranged with a predetermined interval therebetween in the vertical direction. The base end portions of support shafts 21a and 21b whose axial lines extend in the horizontal direction are pivotably supported in shaft holes formed in the bearing portions 19a and 19b in a state of being prevented from coming off.

The support shafts 21a and 21b are pivotably supported in shaft holes formed in bearing portions 25a and 25b fixed, in a state of being prevented from coming off, to the base end sides of a pair of swing arms 23a and 23b arranged in parallel to each other with the predetermined interval provided therebetween. Further, bearing portions 27a and 27b are fixed to the leading end sides of the swing arms 23a and 23b at the portions apart from the support shafts 21a and 21b by a predetermined interval. The base end portions of support shafts 29a and 29b whose axial lines extend in the horizontal direction are pivotably supported in shaft holes formed in the bearing portions 27a and 27b in a state of being prevented from coming off.

The support shafts 29a and 29b are pivotably supported, in a state of being prevented from coming off, in shaft holes formed in a pair of vertically-arranged bearing portions 35a and 35b which are fixed, with an interval equal to the interval between the support shafts 21a and 21b provided therebetween, to a mounting arm 33 to the lower end of which a holder grip 31 serving as a holder member is attached. Accordingly, the vertical frame 17 and mounting arm 33 vertically extending in parallel to the vertical frame 17 constitute, through the pair of swing arms 23a and 23b, a parallel link.

A main body base portion of a cylinder 37 constituting a swing member is swingably supported by the vertical frame 17. A rod 37a of the cylinder 37 is fixed to a support shaft 41 whose axial line extends in the horizontal direction and which is pivotably supported in a state of being prevented from coming off by a mounting portion 39 fixed to one swing arm 23a (although the mounting portion 39 (i.e., cylinder 37) is fixed to the upper side swing arm in this example, it may be fixed to the lower side swing arm). When the cylinder 37 is actuated, the swing arms 23a and 23b swing about the support shafts 21a and 21b in parallel to each other.

The rod 37a of the cylinder 37 is fixed to the swing arm 23a at the position nearer to the base end portion of the swing arm 23a. This allows the holder grip 31 to be moved in the vertical direction with a long stroke by means of a shorter stroke cylinder 37.

The holder grip 31 holds a resin-molded product or a sprue 43 from which a gate is cut by a mold structure by means of a pair of holder claws 31a opened/closed by the operation of a cylinder and electric motor (which are not shown) incorporated therein. In place of the holder grip 31, a member adhered to the resin-molded product for holding the same may be used as the holder member. Hereinafter, in the present embodiment, a case where the sprue 43 from which a gate is cut by mold opening operation is held for removal will be described.

A reference numeral 45 in the drawings denotes a shock absorbing member that is abutted with the mounting portion 39 of the upper swing arm 23a when the pair of swing arms 23a and 23b swing upward about the support shafts 21a and 21b so as to absorb shock by means of air or spring provided in the shock absorbing member 45.

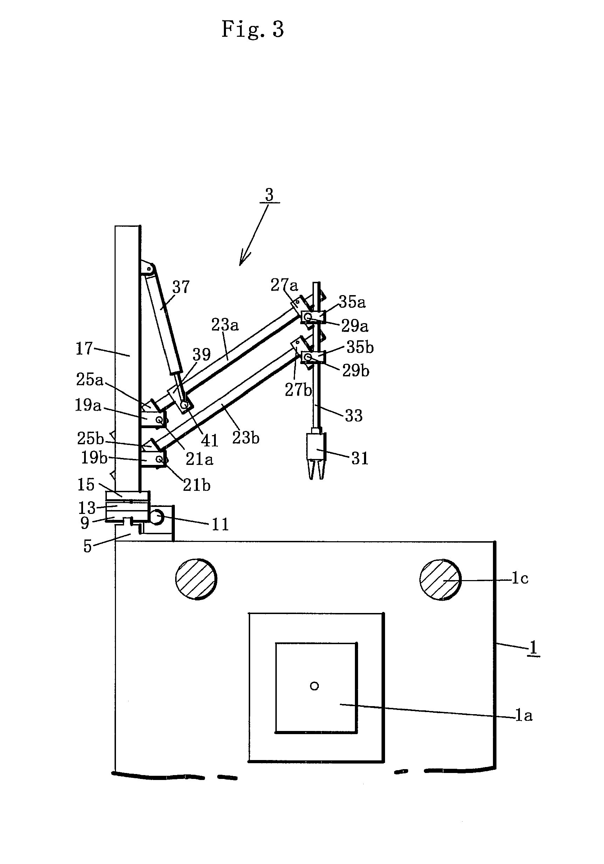

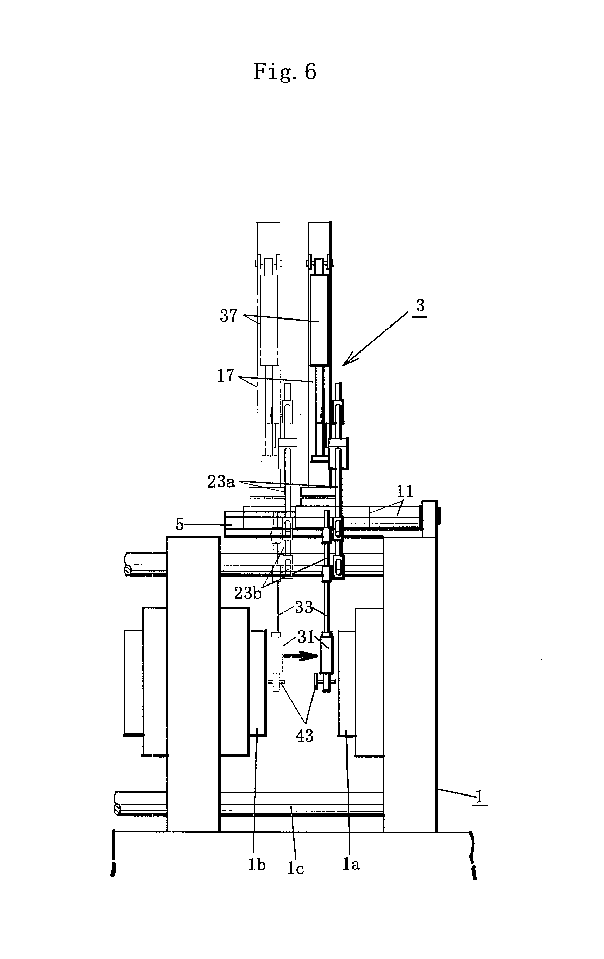

Next, operation in which the apparatus for removing resin-molded product 3 having the above configuration is used to remove the sprue 43 as a resin-molded product will be described. Note that while operation of removing a product part of the resin-molded product is executed by the apparatus for removing resin-molded product disclosed in JP2003-300232A and JP2003-245927A in parallel with the sprue removal operation, the description thereof will be omitted. Further, the illustration of the shock absorbing member 45 is omitted in FIGS. 3 to 9.

As described above, the apparatus for removing resin-molded product 3 of the present embodiment is configured to remove the sprue 43 as a resin-molded product outside the resin molding machine by means of the holder grip 31. Here, the resin molding machine is assumed to have a three-mold structure including a movable mold (not shown), a fixed mold 1a, and a runner mold 1b between the movable mold and fixed mold 1a and cut the gate from the sprue 43 in the product portion of the resin-molded product when the respective molds are opened.

As shown in FIG. 3, when the cylinder 37 is actuated such that the rod 37a contracts, the pair of swing arms 23a and 23b are swung upward about the support shafts 21a and 21b, thereby moving the holder grip 31 to a stand-by position located upper than a tie bar 1c on the front side of the fixed mold 1a fixed to the fixed platen 1.

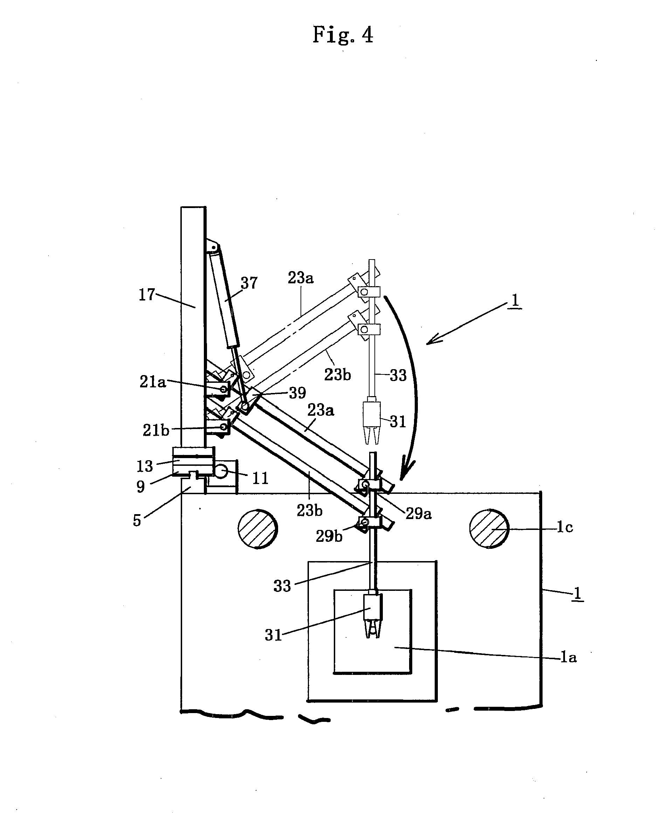

When a mold opening operation completion signal from the resin molding machine is input to the apparatus for removing resin-molded product 3 at the timing of completion of injection molding, a controller (not shown) of the resin-molded removing machine 3 actuates the cylinder 37 so as to expand the rod 37a to swing the pair of swing arms 23a and 23b downward about the support shafts 21a and 21b, causing the holder grip 31 to enter between the opened fixed molding 1a and runner molding 1b, as shown in FIG. 4. At this time, the mounting arm 33 is moved downward in parallel to the vertical frame 17 in accordance with the swing of the pair of swing arms 23a and 23b, causing the holder grip 31 to enter between the molds 1a and 1b in a vertical posture.

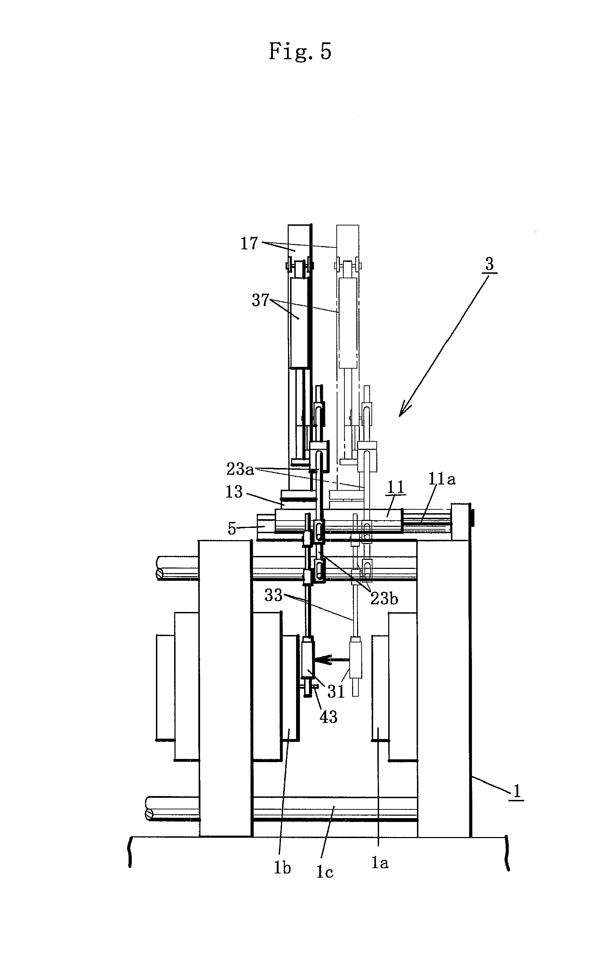

Then, as shown in FIG. 5, in synchronization with or after the above operation, the controller actuates the cylinder 11 so as to expand the rod 11a and moves the movable body 9 to the runner molding 1b side (in the front direction) relative to the main body frame 5, thereby bringing the holder grip 31 close, in a facing manner, to the sprue 43 held in the runner mold 1b.

The controller then causes the holder grip 31 to hold the sprue 43. After that, when receiving a holding confirmation signal from a holding detector (not shown) provided in the holder grip 31, the controller actuates the cylinder 11 in the returning direction so as to contract the rod 11a and moves the movable body 9 in the direction apart from the runner mold 1b relative to the main body frame 5. With this operation, the sprue 43 held by the holder grip 31 is removed from the runner mold 1b.

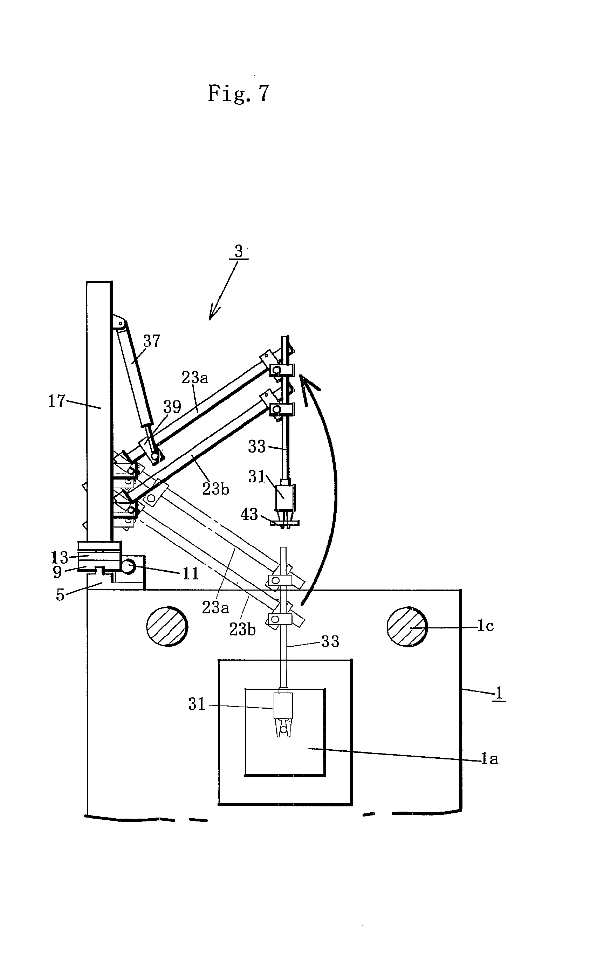

After or at the timing slightly delayed from the above operation, as shown in FIG. 7, the controller actuates the cylinder in the returning direction so as to contract the rod 37a to swing the pair of swing arms 23a and 23b upward about the support shafts 21a and 21b, thereby moving the holder grip 31 to the stand-by position. That is, the holder grip 31 holding the sprue 43 is pulled up from between the molds 1a and 1b and situated at a height position that does not interfere with the tie bar 1c of the resin molding machine or a safety door (not shown).

After the holder grip 31 is pulled up from between the molds 1a and 1b and situated at a height position that does not interfere with the tie bar 1c of the resin molding machine or a safety door, the controller outputs a removal completion signal to a controller of the resin molding machine to allow execution of a next molding operation. When the swing arms 23a and 23b are swung upward, the shock absorbing member 45 is abutted with an abutting member of the upper swing arm 23a to absorb shock at the time of stop of the swing, thereby preventing the holder grip 31 from being greatly vibrated, which keeps the holding state of the sprue reliably.

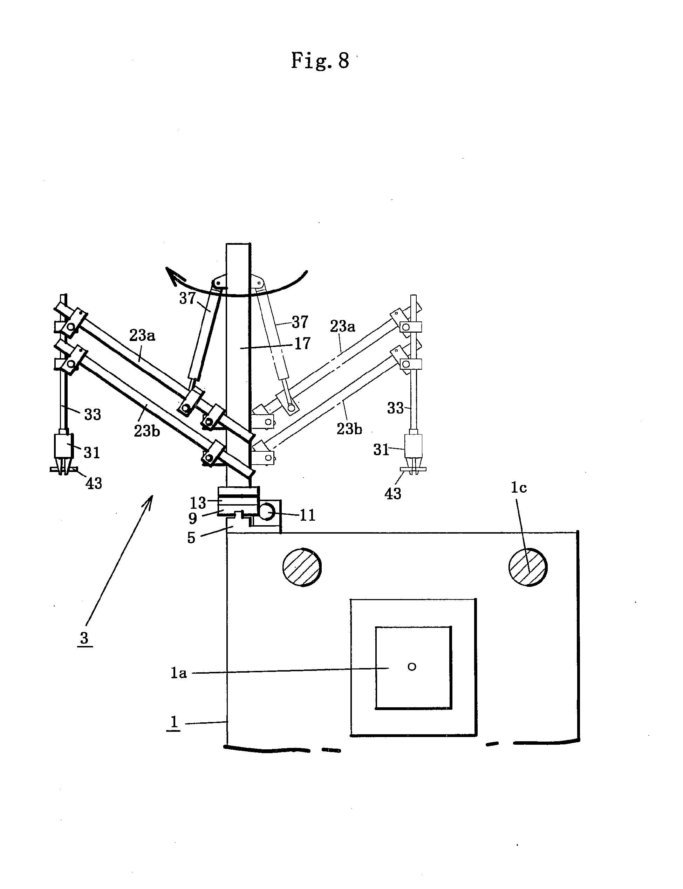

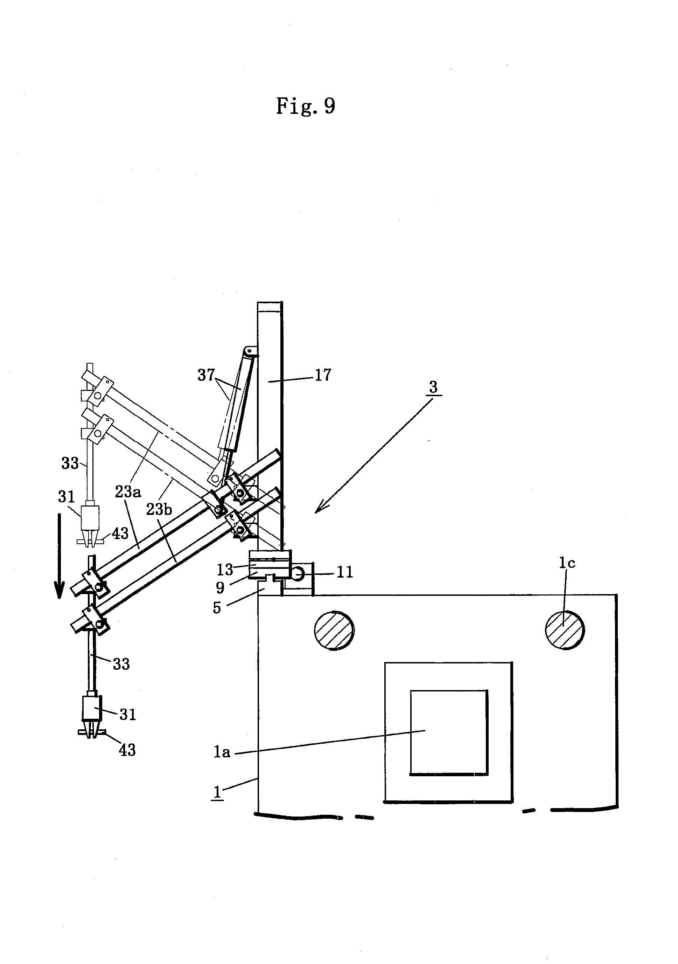

Further, as shown in FIG. 8, after or at the timing slightly delayed from the swing operation of the pair of swing arms 23a and 23b, the controller drives the rotating member 13 to rotate the vertical frame 17 by, e.g., 180°, thereby moving the holder grip 31 to a position outside the resin molding machine on the operating side or the non-operating side. After that, as shown in FIG. 9, the controller actuates the cylinder 37 to swing the pair of swing arms 23a and 23b downward about the support shafts 21a and 21b to thereby bring the holder grip 31 holding the sprue 43 close to the release position of sprue. At this time, the controller releases the holding state of the holder grip 31 to thereby complete the removal operation of the sprue 43.

After the completion of the removal of the sprue 43, the controller actuates the cylinder 37 in the returning direction and rotating member 13 to move the holder grip 31 to the stand-by position and makes the holder grip 31 to stand by at the stand-by position until the mold opening operation completion signal is input from the resin molding machine at the timing of completion of the molding work.

According to the present embodiment, it is possible to move up and down the holder grip 31 between the position facing the mold and a predetermined height position that is apart from the mold and does not interfere with the tie bar 1c or a safety door with a simple configuration in which a parallel link is constituted by the vertical frame 17 and mounting frame 33 through the pair of swing arms 23a and 23b to thereby reduce the size and weight of the entire machine, resulting in a reduction in production cost.

Further, it is possible to move the holder grip 31 in the vertical direction with a long stroke by using the shorter stroke cylinder 37 as a member for swinging the swing arms 23a and 23b, thereby reducing the size and weight of the apparatus for removing resin-molded product 3.

In the above description, the apparatus for removing resin-molded product 3 removes the sprue 43. However, in the case where a resin molding machine of small-sized is used, the apparatus for removing resin-molded product 3 may be embodied as an apparatus for removing a resin-molded product in which a article from which the gate is not cut and a sprue are integrated with each other or an article of a resin-molded product from which the gate is cut.

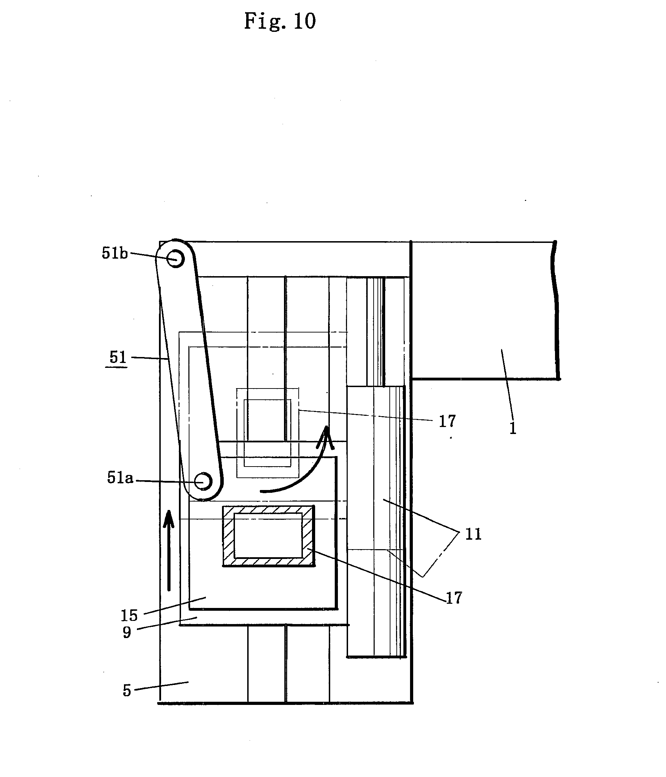

In the above description, the vertical frame 17 is rotated by the rotating member 13 fixed to the movable member 9. However, as shown in FIG. 10, in the case where the release position of sprue is set at the side of the injection unit in the resin molding machine and where the rotation angle of the vertical frame 17 is set to 90°, the mounting member 15 of the vertical frame 17 is supported so as to rotate with respect to the movable member 9, and a corner portion of the mounting member 15 and main body frame 5 are connected to each other by a link bar 51 pivotably supported by shafts 51a and 51b to thereby constitute a link rotating member.
Then, as shown by a dashed line in FIG. 10, when the movable body 9 is moved to the fixed platen 1 side in accordance with the actuation of the cylinder 11 in the returning direction, the mounting member 15 and thus the vertical frame 17 are rotated by the link bar 51, whereby the holder grip 31 is positioned at the side of the injection unit in the resin molding machine.

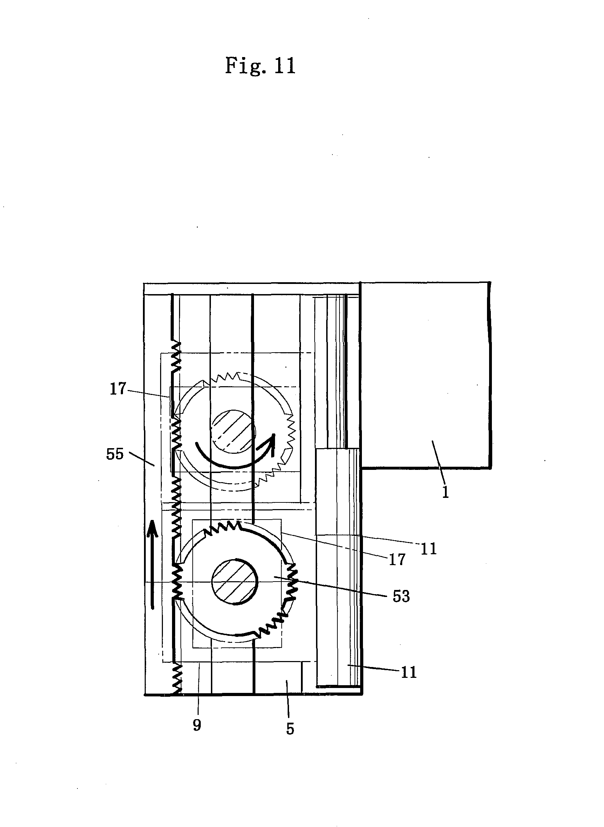

Further, as shown in FIG. 11, a pinion gear 53 serving as a toothed wheel constituting a part of a link rotating member fixed to the mounting member 15 of the vertical frame 17 supported by the movable body 9 so as to rotate is engaged with a lack gear 55 serving as a plate teeth constituting a part of the link rotating member fixed in the longitudinal direction of the main body frame 5.
Then, when the movable body 9 is moved to the fixed platen 1 side, the mounting member 15 and thus the vertical frame 17 are rotated by a predetermined angle by the pinion gear 53 engaged with the lack gear 55 such that the holder grip 31 is positioned inside or outside the resin molding machine.

In the above description, the shock absorbing member 45, which is fixed to the vertical frame 17, is abutted with the abutting member of the swing arm 23a swinging upward so as to absorb shock at the time of stop of the swing, thereby keeping the holding state of the sprue 43 by the holder grip 31. Alternatively, however, another shock absorbing member may be fixed to the lower portion of the vertical frame 17. In this case, when the swing arms 23a and 23b swing downward, the shock absorbing member fixed to the lower portion of the vertical frame 17 is abutted with the lower swing arm 23b to thereby absorb shock at the time of stop of the swing.

Further, it is possible to provide a stopper in place of the shock absorbing member so as to arbitrarily adjust the swingable range of the swing arms 23a and 23b.

Further, it is possible to provide the present invention as a method for removing a resin-molded product outside a resin molding machine by moving a holder member, comprising as bellow.
Swinging in the vertical direction a pair of swing arms swingably supported in parallel to each other with a predetermined interval by a vertical frame which is provided in a fixed platen of the resin molding machine so as to extend in the vertical direction, to move in parallel to the center axial direction of the resin molding machine, and to rotate, thereby causing a holder member, which is fixed to the lower portion of a mounting arm pivotably supported at the leading end portions of the respective swing arms in parallel to the vertical frame, to move up and down in a vertical posture so as to remove the resin-molded article from a mold of the resin molding machine.

## Claims

1. A apparatus for removing resin-molded product provided in a resin molding machine and configured to remove a resin-molded product outside the resin molding machine by moving a holder member, comprising:
a main body frame fixed to a fixed platen in the resin molding machine so as to extend in parallel to the center axial line of the resin molding machine;
a movable body supported on the main body frame so as to move between the fixed platen side and a movable mold side;
a moving member for reciprocating the movable body;
a vertical frame having an axial line in the vertical direction and supported so as to rotate with respect to the movable body;
a rotating member for rotating the vertical frame;
a pair of swing arms swingably supported by the vertical frame at their base end portions and arranged in parallel to each other with a predetermined interval;
a mounting frame pivotably supported at the leading end portions of the respective swing arms in parallel to the vertical frame and having an axial line in the vertical direction;
a swing member connected to at least one of the swing arms and swing the swing arm in the vertical direction; and
a holder member fixed to the lower portion of the mounting frame and configured to hold the resin-molded product.

2. A apparatus for removing resin-molded product provided in a resin molding machine and configured to remove a resin-molded product outside the resin molding machine by moving a holder member, comprising:
a main body frame fixed to a fixed platen in the resin molding machine so as to extend in parallel to the center axial line of the resin molding machine;
a movable body supported on the main body frame so as to move between the fixed platen side and a movable mold side;
a moving member for reciprocating the movable body;
a vertical frame having an axial line in the vertical direction and supported so as to rotate with respect to the movable body;
a link rotating member for rotating the vertical frame in accordance with the movement of the movable body;
a pair of swing arms swingably supported by the vertical frame at their base end portions and arranged in parallel to each other with a predetermined interval;
a mounting frame pivotably supported at the leading end portions of the respective swing arms in parallel to the vertical frame and having an axial line in the vertical direction;
a swing member connected to at least one of the swing arms and swing the swing arm in the vertical direction; and
a holder member fixed to the lower portion of the mounting frame and configured to hold the resin-molded product.

3. The apparatus for removing resin-molded product according to claim 2, wherein
the link rotating member is constituted by an arm having one end rotatably supported by the main body frame and the other end rotatably supported by the vertical frame and is configured to rotate the vertical frame in accordance with the movement of the movable body.

4. The apparatus for removing resin-molded product according to claim 2, wherein
the link rotating member is constituted by a plate teeth provided in the longitudinal direction of the main body and a toothed wheel fixed to the vertical frame rotatably supported by the movable body so as to be engaged with the plate teeth and is configured to rotate the vertical frame in accordance with the movement of the movable body.

5. The apparatus for removing resin-molded product according to claim 1 or 2, wherein
a stopper configured to be abutted with the swing arm so as to restrict the swing of the swing arm is fixed to at least one of the upper portion and lower portion of the vertical frame.

6. The apparatus for removing resin-molded product according to claim 1 or 2, wherein
a shock absorbing member configured to be abutted with the swing arm so as to absorb shock at the time of the stop of the swing of the swing arm is fixed to at least one of the upper portion and lower portion of the vertical frame.
